# EUROPEAN PATENT SPECIFICATION

(11) **EP 3 711 995 B1**
(45) Date of publication and mention of the grant of the patent: **15.10.2025**
(21) Application number: 20164063.8
(22) Date of filing: 18.03.2020
(51) Int. Cl.: B60K 7/00, B60K 11/02, B60K 11/04

(54) **BUS WITH COOLED IN-WHEEL ELECTRIC ENGINES**
BUS MIT GEKÜHLTEN ELEKTROMOTOREN IM RAD
BUS À MOTEURS ÉLECTRIQUES REFROIDIS DANS LA ROUE

(30) Priority: 20.03.2019 LU 101159
(43) Date of publication of application: 23.09.2020
(73) Proprietor: Alpha EC Industries 2018 S.à r.l., 1661 Luxembourg (LU)
(72) Inventor: Hallundbæk, Jørgen, 1661 Luxembourg (LU)
(74) Representative: Ipsilon Benelux

(56) References cited:
- WO-A1-2005/005189
- WO-A1-2012/121629
- CN-A- 109 229 080
- DE-A1- 19 732 637
- DE-C2- 19 732 637
- JP-A- 2009 227 130
- US-A1- 2019 068 028

## Description

### Technical field

The invention lies in the field of engine cooling. More precisely, the invention proposes a bus with driving wheels which comprises cooled electric engines.

### Background of the invention

Electric buses are provided with electric engines. During propulsion phases and regenerative phases, the electric machines heat. This temperature elevation reduces the efficiency since the permanent magnet properties decrease. In addition, a high temperature may irremediably damage the permanent magnets and other electric devices.

In order to preserve the yield, an electric engine is generally provided with a cooling device. A cooling flow prevents excessive heat peaks, and allows a temperature control. Yet, this temperature control may turn out cumbersome when the corresponding vehicle runs in cities where speed is limited by law or by traffic jam. Then, the potential cooling flow is limited. Uphill slopes require more electric power which heat even more the electric engines.

Moreover, the positioning of the heat exchanger must comply with several requirements, notably in mass transportation vehicles such as buses. Indeed, the available place is reduced. In addition, the cost, the weight and the passenger comfort must be considered as well. On top of this, servicing and collisions with other vehicles also affect the way the heat exchangers are arranged close to seating and standing passengers.

The document DE 1973 2 637 A1 discloses an omnibus comprising an in-wheel electric engine with a cooling pipe where cooling water flows.

The document JP 2009 227130 A discloses a wheel with an in-wheel engine lubricated by an oil circuit. The oil flows through an oil cooler in the middle of the oil path.

The document US 2019/068028 A1 discloses a four-wheel vehicle equipped with a cooling mechanism. Each wheel is equipped with an electric engine cooled by an oil cooler. The oil coolers compose heat exchangers coupled to the radiator.

### Technical problem to be solved

It is an objective of the invention to present a bus, which overcomes at least some of the disadvantages of the prior art.

### Summary of the invention

According to a first aspect of the invention, a bus in accordance with claim 1 is provided. Further, a bus, notably an articulated bus with several units is disclosed, the bus comprising: a passenger compartment adapted for at least fifty passengers, a wheel housing, a wheel disposed in the wheel housing and comprising an in-wheel electric engine, a cooling circuit in fluid flow communication with the in-wheel electric engine and comprising a heat exchanger outside the wheel housing.

Preferably, the cooling circuit comprises a first passage which is outside the in-wheel electric engine and which comprise a first inner width W1, the cooling circuit further comprising a second passage which is in the in-wheel electric engine and which comprise a second inner width W2, the first inner width W1 representing at least 80% of the second inner width W2, optionally the first inner width W1 is larger than the second inner width W2.

Preferably, the heat exchanger is transversally and/or vertically level with the wheel, respectively with the in-wheel electric engine, the bus further comprising a seat row above said heat exchanger, or a seat above the heat exchanger. Thus, the heat exchanger heats the seat row.

Also according to the invention the wheel housing comprises a tight wall and/or a protection bar between the wheel and the heat exchanger, and the bus comprises an enclosure in which the heat exchanger is arranged, said enclosure being adjacent to the wheel housing and/or the passenger compartment, the bus is notably adapted such that the heat exchanger heats the passenger compartment.

Preferably, at least one or the enclosure may be a cavity and/or a recess.

Preferably, the second wheel and the heat exchanger are aligned, and/or transversally overlapping. Preferably, the wheel is a first wheel, the bus further comprising a second wheel identical to the first wheel and disposed in the wheel housing longitudinally at distance from the first wheel, the cooling medium being adapted for flowing through the in-wheel electric engine of said second wheel.

Preferably, the cooling circuit comprises a pump adapted for pressurizing a cooling liquid in the first wheel and in the second wheel, and/or a tank with a cooling liquid, such as a water glycol mix, the cooling liquid being intended to flow through the in-wheel electric engine in order to cool it. Preferably, the bus comprises a suspension arm adapted to pivot with respect to the wheel housing and/or the passenger compartment, the cooling circuit comprising a tube, notably a resilient tube, joined to said suspension arm and being in fluid flow communication with the in-wheel electric engine.

Preferably, the suspension arm is an upper suspension arm, and/or the cooling circuit comprising a pipe fixed to said upper suspension arm or the suspension arm, said pipe being stiffer than the resilient tube.

Preferably, the bus comprises a suspension arm configured for pivoting with respect to the wheel housing and/or the passenger compartment, the cooling circuit comprising a tube, notably a resilient tube, joined to said suspension arm, the cooling circuit further comprising a pipe fixed to said suspension arm and being stiffer than the resilient tube.

Preferably, the pipe is in fluid flow communication with the in-wheel electric engine through the tube.

Preferably, the bus comprises a battery pack adapted for electrically powering the in-wheel electric engine, the cooling circuit comprising a cooling unit adapted for cooling said battery pack, the wheel housing being disposed longitudinally between the battery pack and the heat exchanger. Preferably, the in-wheel electric engine comprises a rotor and a stator, said stator comprising a diameter and a thickness TH along the rotation axis of the in-wheel electric engine.

Preferably, the stator is arranged in the rotor, the cooling circuit comprising an inner network through the stator in order to cool said stator.

Preferably, the wheel further comprises a disc brake with a brake disc, the distance D between the brake disc and the stator being larger than the width W of the stator.

Preferably, the bus comprises a frame and a movable wheel support on which the wheel is rotatably fixed, the wheel support is notably disposed between the brake disc and the in-wheel electric engine.

Preferably, transversally, the in-wheel electric engine comprises an inner face and an outer face, the cooling circuit comprising an inlet and an outlet on the inner face, the inlet and the outlet notably being arranged on the inner face, preferably in the upper half of the inner face.

Preferably, the wheel comprises a radial space between the in-wheel electric engine and the rim of the wheel, said radial space being radially larger than the outer radius of the in-wheel electric engine, possibly at least two times larger than the outer radius.

Preferably, the cooling circuit is a first cooling circuit, the wheel housing is a first wheel housing, the bus further comprising additional wheel housings and additional cooling circuits which are identical to the first cooling circuit and which are each associated with one of the additional wheel housings, the additional cooling circuits notably being independent from one another.

Preferably, the cooling circuit comprises a first passage which is outside the in-wheel electric engine and which comprise a first inner width W1, the cooling circuit further comprising a second passage which is in the in-wheel electric engine and which comprise a second inner width W2, the first inner width W1 being larger than the second inner width W2.

Preferably, the second inner width W2 represents at least 4% of the outer diameter of the in-wheel electric engine.

Preferably, the heat exchanger is longitudinally aligned with the wheel.

Preferably, the heat exchanger is vertically level with the passenger compartment.

Preferably, the heat exchanger comprises a heat dissipation device.

Preferably, the wheel extends over the whole height of the heat exchanger.

Preferably, the pump and/or the tank are arranged in the enclosure.

Preferably, the heat exchanger is intended to be cooled by the bus environment.

Preferably, the heat exchanger is adapted for cooling a cooling medium flowing through the cooling circuit.

Preferably, the wheel comprises a rim with an inner space, the in-wheel electric engine being at least partially disposed in said inner space.

Preferably, the inner space comprises a first outer diameter which is larger than a second outer diameter of the in-wheel electric engine, preferably at least two times larger.

Preferably, the additional cooling circuits are separate and distinct.

Preferably, the wheel comprises an outer half and an inner half in which the in-wheel electric engine is arranged, the in-wheel electric engine being at distance from said outer half.

Preferably, the wheel support is a steering knuckle which is adapted for moving vertically and/or for pivoting about a vertical pivot axis.

Preferably, the cooling circuit comprises water, and is notably adapted to keep the water temperature under 100°C.

Preferably, the cooling fluid is isolated from the bus environment by the cooling circuit. Preferably, the cooling circuit comprise a first portion fixed to a suspension arm, and a second portion of reduced stiffness which comprise a lower stiffness than the first portion.

Preferably, the second portion is between the first portion and the engine.

Preferably, the first portion is at distance from the engine.

It is another aspect of the invention to provide a bus, notably an articulated bus with several units, the bus comprising: a passenger compartment adapted for at least fifty passengers, a seat row, notably a longitudinal seat row; a wheel disposed under the seat row and comprising an in-wheel electric engine, a cooling circuit in fluid flow communication with the in-wheel electric engine and comprising a heat exchanger under the seat row.

The passenger compartment is not an essential aspect of the invention. It is another aspect of the invention to provide a cooling process of an in-wheel electric engine for a bus, the bus comprising: a capacity of at least fifty passengers notably defined by a passenger compartment, a wheel housing, a wheel with an in-wheel electric engine, a cooling circuit with a cooling liquid, a heat exchanger at distance from the wheel, a connection between the heat exchanger and the in-wheel electric engine, the cooling process comprising the steps: heating the in-wheel electric engine, and cooling the in-wheel electric engine by means of the cooling liquid, wherein the speed of the cooling liquid in the connection is similar to the speed of the cooling liquid in the in-wheel electric engine, the bus notably being in accordance the invention, and the bus comprises a seat over the cooling circuit.

The cooling liquid may generally be a fluid such as a gas.

Preferably, the speed of the cooling liquid in the connection represents from 50% to 150%, or from 80% to 120%, of the speed of the cooling liquid in the in-wheel electric engine.

Preferably, during step cooling the in-wheel electric engine, the passenger compartment is heated, and the pressure of the cooling fluid in the connection is similar to the pressure of the cooling fluid in the in-wheel electric engine.

Preferably, the heat exchanger is at distance and/or outside the wheel housing.

Preferably, the wheel is inside the wheel housing.

It is another aspect of the invention to provide a bus comprising: a passenger compartment adapted for at least fifty passengers, a wheel housing, a wheel disposed in the wheel housing and comprising an in-wheel electric engine, a cooling circuit in fluid flow for the in-wheel electric engine and comprising a heat exchanger outside the wheel housing, a first seat above the heat exchanger.

Preferably, the bus further comprises a second seat above the enclosure; the first seat and the second seat defining a longitudinal seat row longitudinally extending above the wheel housing and the heat exchanger.

Preferably, the bus further comprises an enclosure in which the heat exchanger is disposed, said enclosure being under the second seat, the seat row at least longitudinally extending from the wheel housing to the enclosure.

It is another aspect of the invention to provide an articulated bus comprising: at least two units pivoting with respect to each other, a passenger compartment through the at least two units, said passenger compartment defining a passenger capacity of at least fifty passengers, a wheel housing vertically level with the passenger compartment, a wheel disposed in the wheel housing and comprising an in-wheel electric engine, an enclosure adjacent to the passenger compartment, a cooling circuit connected to the in-wheel electric engine and comprising a heat exchanger which is arranged in said enclosure.

Preferably, the enclosure is adjacent to the wheel housing, wherein the enclosure is vertically level with the passenger compartment and the wheel housing, wherein the articulated bus comprises a passenger platform at least extending under the passenger compartment and the enclosure.

It is another aspect of the invention to provide a cooling process of an in-wheel electric engine for a bus, the bus comprising: a passenger compartment adapted for receiving at least fifty passengers, a wheel housing, a wheel and comprising an in-wheel electric engine, a cooling circuit with a cooling liquid, a heat exchanger at distance from the wheel, a connection between the heat exchanger and the in-wheel electric engine, the cooling process comprising the steps: heating the in-wheel electric engine, and cooling the in-wheel electric engine by means of the cooling liquid, wherein the flow speed of the cooling liquid in the connection represents from 40% to 200%, or from 50% to 150%, or from 80% to 120%, of the flow speed of the cooling liquid in the in-wheel electric engine, the bus notably being in accordance with the invention.

The heat exchanger is not an essential feature of the invention. It is another aspect of the invention to provide a cooling process, notably a temperature management process, of an in-wheel electric engine for a bus, the bus comprising: a passenger compartment adapted for receiving at least fifty passengers, a wheel housing, a wheel and comprising an in-wheel electric engine, a cooling circuit with a cooling liquid, the cooling process comprising the steps: heating the in-wheel electric engine, and cooling the in-wheel electric engine by means of the cooling liquid which is cooled outside the wheel and notably outside the wheel housing, the bus notably being in accordance with the invention. The cooling liquid flow speed(s) may be an average flow speed, or a maximum flow speed.

It is another aspect of the invention to provide a use of a heat exchanger for heating the passenger compartment of a bus, wherein the bus comprises: a wheel housing, a wheel disposed in the wheel housing and comprising an in-wheel electric engine, a cooling circuit for with the in-wheel electric engine and comprising a heat exchanger; an enclosure in heat exchange with the passenger compartment and in which the heat exchanger is disposed, the bus notably being in accordance with the invention.

It is another aspect of the invention to provide a use of a heat exchanger for heating a passenger compartment of a bus, wherein the bus comprises a wheel housing, a wheel in said wheel housing, an electric in-wheel engine in said wheel, a cooling circuit through the electric in-wheel engine, the heat exchanger being part of said cooling circuit, the bus notably being in accordance with the invention.

It is another aspect of the invention to provide a use of a heat exchanger for heating the passenger compartment of a bus, wherein the bus comprises: a wheel housing, a wheel disposed in the wheel housing and comprising an in-wheel electric engine, a cooling circuit thermally cooperating with the in-wheel electric engine and comprising a heat exchanger ; and optionally an enclosure in thermal communication with the passenger compartment and in which the heat exchanger is disposed, the bus notably being in accordance with the invention.

It is another aspect of the invention to provide a use of a heat exchanger for heating seat of a bus, wherein the bus comprises: a wheel housing, a wheel disposed in the wheel housing and comprising an in-wheel electric engine, a cooling circuit thermally cooperating with the in-wheel electric engine and comprising a heat exchanger thermally coupled to the seat; the bus notably being in accordance with the invention.

Preferably, the bus further comprises an enclosure in which the heat exchanger is disposed and the set being above said enclosure.

Preferably the seat comprises a seat place row thermally coupled to the heat exchanger and/or above said enclosure.

The different aspects of the invention may be combined to each other. In addition, the preferable features of each aspect of the invention may be combined with the other aspects of the invention, unless the contrary is explicitly mentioned.

### Technical advantages of the invention

The invention improves the flow control through the cooling circuit. It provides a position for the heat exchanger which is sufficiently remote from the hot source for a better cooling, but sufficiently close in order to shorten the lines so as to lower the pressure losses.

In addition, the pressure losses are further managed by specific diameter or width choices. These dimensions foster smooth flow in spite of the connection deformation, and of the vibrations generated by the contact between the wheel and the ground unevenness.

The invention addresses the technical problem of cooling a substantially small size in-wheel electric engine equipping a steering and driving wheel, where said wheel drives a bus which keeps a spacious passenger compartment with seat rows. Thus, the passenger capacity is preserved, and the ratio between seat places and standing places is optimized.

### Brief description of the drawings

Several embodiments of the present invention are illustrated by way of figures, which do not limit the scope of the invention, wherein:
- figure 1 provides a schematic illustration of a side view of a bus in accordance with a preferred embodiment of the invention;
- figure 2 provides a schematic illustration of an aerial view of a portion of a bus frame in accordance with a preferred embodiment of the invention;
- figure 3 provides a schematic illustration of a longitudinal view of a suspension assembly in accordance with a preferred embodiment of the invention;
- figure 4 provides a schematic illustration of through cut of a wheel with a cooling circuit in accordance with a preferred embodiment of the invention;
- figure 5 provides a schematic illustration of a transversal view of a wheel with a cooling circuit in accordance with a preferred embodiment of the invention;
- figure 6 provides a schematic illustration of the interface between a connection and an engine of a cooling circuit in accordance with a preferred embodiment of the invention;
- figure 7 provides a schematic illustration of a cooling process in accordance with a preferred embodiment of the invention.

### Detailed description of the invention

This section describes the invention in further detail based on preferred embodiments and on the figures. Similar reference numbers will be used to describe similar or the same concepts throughout different embodiments of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the bus in accordance with the invention is evidently controlled by a computer, even though such a computer is not explicitly referenced on the figures nor referenced in the description.

By way of convention, it may be defined that the word "longitudinal" refers to the longitudinal direction and may correspond to the main driving direction of the bus. It may be along the main central axis of the vehicle. The word "transversal" refers to the transversal direction and may be perpendicular to the longitudinal direction. It may be understood that the directions are not used in a strict meaning. Indeed, each direction used below may include a variation of at most: 5°, or 2°, or 1°, with respect to a strict meaning. The skilled in the art will understood that a longitudinal pivot axis may be inclined with respect to the longitudinal direction of the bus and/or the horizontal direction.

In the following description and claims, the mentioned length(s), width(s), and thickness(es) may be average ones.

The radial direction is understood as perpendicularly to an associated wheel rotation axis. The radial direction is along the radius of a wheel.

The term "similar" used in relation with a value such as a size or flow, is understood as implying a variation of at most: 50%; preferably 20%, more preferably 10%.

It should be noticed that the present drawings generally provide configurations where wheels are substantially parallel to the longitudinal direction. The steering angle is of 0°. The vehicle may drive along a straight trajectory. However, the skilled in the art will be able to adapt the following teaching to situations where the steering angle of the bus is changed.

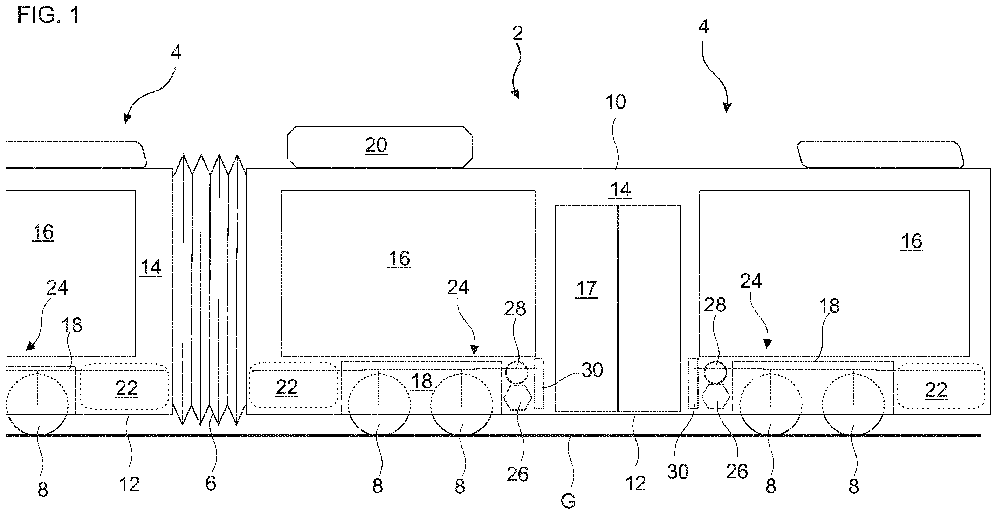

Figure 1 shows a vehicle for mass transportation in accordance with a preferred embodiment of the invention. The vehicle is partially represented.

The vehicle is adapted for transportation of passengers in cities and may transport about fifty, or one hundred passengers, for instance one hundred and twenty passengers. The vehicle may be a bus 2, notably an electric bus 2. The bus 2 may include electric driving engines and electric batteries (not represented) powering the electric driving engines. The bus 2 may be purely electric, in the meaning that it is only driven by electric power. The bus 2 may be combustion engine free.

The bus 2 may be an articulated bus. It may comprise a first unit 4 and a second unit 4 (partially represented). Each unit 4, may form a body, and/or may form a rigid cart. Each unit 4 may be a trailer and/or a tractor. The units 4 may be similar or identical. These units 4 may be joined by a joint, for instance a hinged joint 6 enabling the units 4 to swivel with respect to each other.

In the current embodiment, only two units 4 are represented, however it is contemplated in the current invention that the electric bus 2 includes three, four, or more units 4; which are articulated with respect to one another by hinged joint (s) 6. Then, the passenger capacity may be of more than two hundred. Each unit 4 may be self-supporting. Thus, each unit 4 may move without the hinged joint 6.

A bus formed of a single unit is also considered in the invention.

Each unit 4 may include several wheels 8 engaging the ground G. Pairs of symmetric wheels 8 may form axles, for instance four axles for each unit 4. The axles and thus the wheels 8 may be distributed along the length of the bus 2. At least one pair of wheels is formed of steered wheels. Optionally, each wheel 8 of the bus 2 or of at least one unit 4 are steered wheels and/or driving wheels.

The bus 2 may include a bus structure. The bus structure may distribute and/or support the weight of the bus, and load therein. The bus structure may include a roof 10, and/or a passenger platform 12, and/or side walls 14. The side walls 14 may be outer walls. Two transversally opposite side walls 14 may go down from the roof 10 to the passenger platform 12. They may form the bodywork of the bus 2. They may mask the wheels 8. The bodywork may be part of the bus structure. The side walls 14 may receive windows 16 and doors 17 for passengers. Optionally, doors 17 are arranged in one of the two side walls 14, notably between windows 16.

For instance; the side walls 14 may close the wheel housings 18. Optionally, at least one or each wheel housing 18 may receive two longitudinally spaced wheels 8. The wheel housings 18 may form downwardly open boxes. The wheel housings 18 may exhibit four faces in front of the wheels 8. At least one or each wheel housing 18 may be adapted for blocking front, rear and top projections from the associated wheel. The wheel housings 18 may be longitudinally at distance from the ends of the units 4. The wheel housings 18 may be arranged below the windows 16. The door 17 may be disposed between two wheel housings 18 of the corresponding unit 4.

Generally, the or each wheel housing 18 may be understood a space in which at least one wheel is arranged. The or each wheel housing 18 may be a wheel cavity. The or each wheel housing 18 may be a wheel guard.

Equipment may be provided on the roof 10. For instance, the bus may comprise an air conditioning device 20. The air conditioning device 20 may be adapted to cool air in the passenger compartment (behind the door 17). It may be adapted for keeping the temperature between 18°C and 25°C for the passenger comfort. This air conditioning device 20 may be reversible and may heat the passenger compartment during winter. It may comprise a compressible gas.

The bus 2 may comprise at least one battery pack 22. The battery packs 22 may power electric engines driving the bus 2. The battery packs 22 may power electric engines (not represented) which activate the wheels 8. The electric engines may be in-wheel electric engines. For instance, each wheel housing 18 is associated with a battery pack 22. The battery packs 22 may be independent.

In the current example, each unit 4 may comprise four battery packs 22. By way of illustration, the bus 2 includes eight battery packs 22 and eight wheel housings 18. There may be sixteen wheels 8, for instance each with an electric engine. The battery packs 22 may power other equipment of the bus 2.

In order to cool the electric engines, notably the in-wheel electric engines, the bus 2 may comprise at least one cooling circuit 24. The bus 2 may comprise one cooling circuit 24 for each of the wheel housings 18, and thus for each of the wheel pairs. Each battery pack 22 may be associated with a cooling circuit 24. Each cooling circuit 24 may be associated with one wheel housing 18, and/or with at least one wheel 8. Each cooling circuit 24 may cool one or two electric engines. At least one door 17 may be between two adjacent cooling circuit 24. The cooling circuits 24 may be independent from each other. They may be separate and distinct. They may be at distance from each other in order to reduce the length of required pipes when considering the whole vehicle.

The current configuration reduces the thermal stress of the cooling circuits 24, and improves the general reliability. The cost and the weight are considered as well. The or each cooling circuit 24 may comprise a closed loop, and/or vanes which are easier to control.

The or each cooling circuit 24 may comprise a tank 26. Each tank 26 may be a closed and tight vessel. Each tank 26 may be adapted for containing a cooling fluid, notably a cooling liquid. The cooling liquid may comprise water and glycol. The tank 26 may be adapted for resisting to the cooling fluid pressure. The cooling circuit may be adapted for avoiding contact between the cooling fluid and the bus environment.

The or each cooling circuit 24 may comprise a pump 28. The pumps 28 may be adapted for sucking up the cooling fluid, and for injecting it through the corresponding circuit 24. The pumps 28 may inject the cooling fluid in the hydraulically connected electric engines in order to cool them. The cooling fluid pressure in the electric engines may be comprised between 0.5 bar and 2 bars.

The or each cooling circuit 24 may comprise a heat exchanger 30. The heat exchanger(s) 30 may be heat dissipator(s). Each heat exchanger 30 may be adapted to cool down the cooling fluid flowing therethrough by means of the pump 28. The heat exchangers 30 may be in thermal contact of the bus environment. The or each heat exchanger 30 may be separate and distinct from the air conditioning device 20. The heat exchangers 30 may be adapted to cool the battery packs 22, the tanks 26 and the electric engines.

The heat exchangers 30 may be vertically level with the passenger compartment. The heat exchangers 30 may be above the platform 12. They may heat the passenger compartment.

At least one or each heat exchanger 30 may be at distance from the wheels 8. They may be outside the wheel housings 18. Thus, the heat exchangers 30 may be physically protected from projections propelled by the wheels 8.

At least one or each heat exchanger 30 may be arranged in an enclosure. The enclosure may receive the connected pump 28 and the connected tank 26. At least one or each enclosure may be adjacent to the corresponding wheel housing 18. The enclosure and the associated wheel housing 18 may be in contact of each other. Thus, the length of pipe is reduced such that the pressure loss, the cost and the weight are optimized. The cooling circuits 24 are more reliable. The length of the pipes becomes important when their diameter increases.

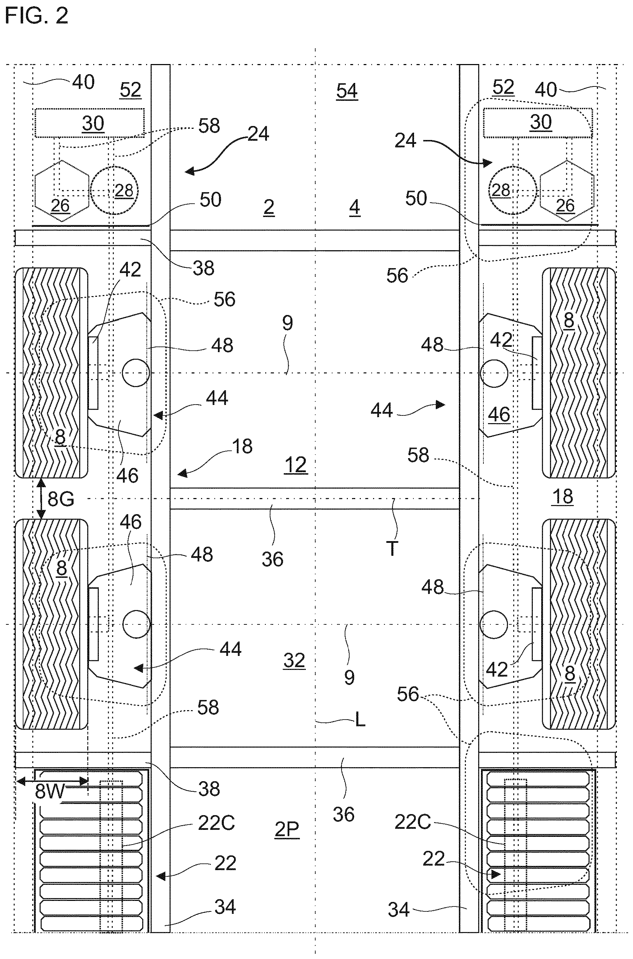

Figure 2 provides an aerial illustration of the frame 32 of a bus 2, notably from a unit 4, in accordance with a preferred embodiment of the invention. The longitudinal central axis L and the transversal direction T are represented. The longitudinal central axis L may correspond to the longitudinal direction L, and may be horizontal.

The bus 2 and/or the unit 4 may correspond to those as described in relation with figure 1. Two pairs or wheels 8 are disposed in the respective wheel housings 18. The rotations axes 9 of the wheels 8 are represented. The wheel rotations axes 9 may correspond to the axles when the wheels 8 are aligned at each side. It may be understood that the wheels 8 comprise toe-in or toe-out. Thus, the term "aligned" may be understood in the meaning of the environment of the invention.

In each wheel housing 18, the wheels 8 may form pairs. The wheel gap 8G between the wheels 8 in the same wheel housing may be smaller than the transversal width 8W of at least one wheel 8 or of each wheel 8. The wheels 8 of each pair are adapted to run on the same wheel path. These wheels 8 may be transversally aligned. In each pair, the wheels 8 are longitudinally offset. The wheel gap 8G may separate them longitudinally. The wheels 8 of each pair may be identical.

The frame 32 may comprise longitudinal beams 34 and transversal beams 36. The platform 12 may be part of the frame 32. The longitudinal beams 34 may delimit transversally the wheel housings 18. Transversal bars 38 may delimit longitudinally the wheel housings 18. Other beams 40 may also form the frame 32 and may delimit the wheel housing 18 and the frame 32. The transversal bar 38 may be considered as a protection bar 38 between the wheels 8 and the heat exchanger 30.

At least one or each wheel 8 may be a driving wheel. At least one or each wheel 8, respectively driving wheel, may comprise an electric engine 42. The electric engines 42 may generally be electric machines. The electric engines 42 may be in-wheel electric engines, or more generally in-wheel engines. The electric engines 42, notably the in-wheel electric engines 42,
may be powered by the battery pack 22. The cooling circuit 24 may comprising a cooling unit 22C in at least one of the battery packs 22. Each cooling unit 22C may be adapted for cooling the corresponding battery pack 22. The cooling units 22C may be in thermal contact of the corresponding battery pack 22, notably of the contained battery cells.

In the current example two battery packs 22 are represented, namely a left battery pack 22 and a right battery pack 22. The combination of the battery packs 22 and of the electric engines 42, notably the in-wheel electric engines 42, allows to drive the bus 2. These electric components may be adapted for driving the bus 2 at least at: 50 km/h or 100 km/h. These speeds may be reached with one hundred passengers in the passenger compartment 2P of the bus.

At least one or each wheel 2 may be joined to the frame 32 by a suspension system 44. At least one or each wheel is joined to the frame 32 by a dedicated suspension system 44. The suspension systems 44 may be separate and distinct from each other. At least one or each suspension system 44 may comprise a steering module (not represented).

At least one or each suspension system 44 may comprise suspension arms 46. The suspension arms may be designated as pivoting arms. The suspension arms 46 may be pivotably fixed to the frame 32, for instance to longitudinal beams 40. The suspension arms 46 may be pivoting links, notably swinging arms. The suspension arms 46 may pivot about horizontal pivot axis. At least one or each suspension arm 46 may pivot about longitudinal pivot axis 48. The longitudinal pivot axes 48 may be parallel.

The wheel housings 18 may comprise plates 50. The plates 52 may be vertical. They may be tight. They may be fixed to the transversal bars 38. The plates 50 may close tightly the wheel housings 18. They may form longitudinal end walls thereon.

The frame 32 may exhibit enclosures 52. The plates 50 may be at the interface between the wheel housings 18 and the enclosures 52. The enclosures 52 may be adjacent to the wheel housings 18. At least one or each enclosure 52 may be adjacent to the passenger compartment 2P. The enclosures 52 may be above the platform 12. The position of the enclosures 52 with respect to the wheel housings 18 allows thermal cooperation. The enclosures 52, more precisely the heat exchangers disposed therein, are cooled by the wheel housings 18 which raises when the bus drives due to the air flow forced by the wheels.

The current portion of the bus 2, respectively of the unit 4, exhibit two cooling circuits 24, namely a left cooling circuit 24 and a right cooling circuit 24. The left and the right cooling circuits 24 may be separated by the passenger compartment 2P. They may be transversally distant. They may be hydraulically and/or thermally independent.

At least one cooling circuit 24 may comprise a tank 26 in the corresponding enclosure 52, and/or a pump 28 in the corresponding enclosure 52. The enclosure 52 may be a cavity or more generally a recess. At least one or each cooling circuit 24 may comprise a heat exchanger 30 in the enclosure 52. As an option, the enclosure 52 may allow an air flow with the passenger compartment 2P and/or with the bus environment. Thus, at least one or each heat exchanger 30 may provide calories to the bus environment and/or the passenger compartment 2P. Thus, the passenger compartment 2P may benefit from the calories generated by the electric engines 42. A kind of synergy is achieved. As apparent from the current figure, each wheel housings 18 separates the associated battery pack 22 and the associated enclosure 52. It may increase heat exchange while allowing a height and a transversal width reduction of the enclosures 52.

The integration of the cooling circuits 24 is performed in a narrow area. Indeed, the cooling circuits 24 may be below seats 56. The seats 56 may form longitudinal rows. The seats 56 may be above the cooling circuits 24. For instance, the tanks 26, the pumps 28 and the heat exchangers 30 may be under the seats 56.

Thus, the cooling circuits 24 may be disposed between the seats 56 and the platform 12. Then the cooling system 54 and its cooling circuits 24 only require a reduced place in the bus since it is divided in smaller units which are individually easier to arrange in the bus 2. At least one or the cooling circuits 24 are adapted for heating the seat(s) 56. Then, the thermal management of the vehicle is improved. The thermal comfort of the seat(s) increases.

The cooling circuits 24 may comprise connections 58, or lines. The connections 58 may form loops, notably closed loops. The pumps 28 may force the cooling liquid circulation in the associated loops. The cooling liquid may flow through the connections 58 in order to meet the battery packs 22, the engines 42, the heat exchangers 30; and thereby achieving temperature control. **In** addition, the connections 58 and the engines 42 may be configured such that the flow speeds in the connections 58 and the engines 42 are similar, and notably reduced. The differences of speeds may be of at most: 30%, or 20% or 10%. The considered speed may be average speeds. Accordingly, the cooling fluid speed remains homogeneous. Accelerations and slowdowns are controlled, notably at the interfaces of the engines 42. The pressures losses are limited. In addition, the liquid speed in the connections 58 may be limited in order to limit the pressure losses therein.

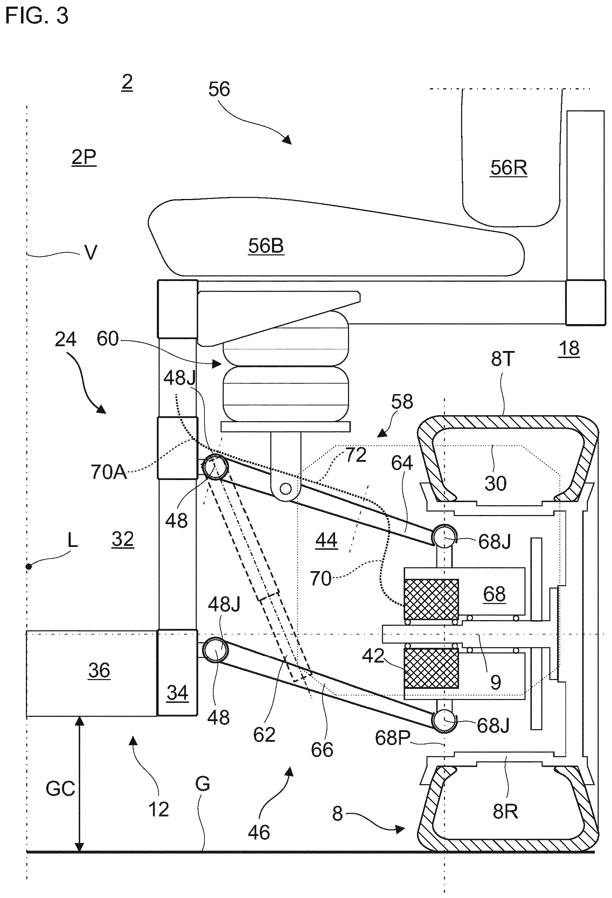

Figure 3 provides a schematic illustration of a longitudinal view of a cooling system 24, and of a suspension system 44 in a wheel housing 18. The transversal direction T, the longitudinal direction L and the vertical direction V are provided. These directions (T, L, V) may be perpendicular to each other.

The bus 2 may correspond to those as described in relation with any one of figures 1 and 2.

The suspension system 44 may be provided with a gas actuator 60 and a damper 62. In addition or as an alternative, the gas actuator 60 forms a gas spring. Varying the gas pressure therein may allow to set its stiffness. This may be useful when the number of passengers varies in the passenger compartment 2P. The damper 62, also designated as shock absorber, may be adapted to absorb and dissipate energy when the wheel 8 meets a protrusion or a recess on/in the ground G, namely the road on which the bus 2 drives.

The suspension system 44 may comprise arms 46 or links. The suspension system 44 may comprise pivoting arms 46 also designated as pivoting links. The pivoting arms 46 may comprise an upper pivoting arm 64 and a lower pivoting arm 66. The upper pivoting arm 64 and the lower pivoting arm 66 may pivot about longitudinal pivot axes 48. Pivot joints 48J may allow the pivoting motions of the pivoting arms (64; 66) about the longitudinal pivot axes 48. These pivoting motions allow the wheel 8 to move between an upper position and a lower position.

The gas actuator 60 may be joined to the upper pivoting arm 64 whereas the damper 62 may be joined to the lower pivoting arm 66. The damper 62 and the gas actuator 60 may be separate and distinct. They may be at distance from each other.

The lower pivoting arm 66 may be joined to the longitudinal beam 34 by means of the lower pivot joint 48J. A transversal beam 36 is apparent. The rotation axis 9 of the wheel 8 may extend through the longitudinal beam 34. The ground clearance GC between the platform 12 and the ground G is represented. An upper longitudinal beam 40 of the frame 32 may form an upper and outer end of the wheel housing 18.

A wheel support 68 receives the wheel 8. The wheel support 68 may comprise bearing about which the wheel 8 turns around its rotation axis 8. The wheel support 68 may be joined to the upper pivoting arm 64 and the lower pivoting arm 66. Thus, the outboard ends of these pivoting arms may be maintained at a fixed distance. Joints, such as pivot joints or ball joints 68J may attach the wheel support 68 to the upper pivoting arm 64 and to the lower pivoting arm 66. The ball joints may allow rotation with respect to three directions. Then, the wheel support 68 may swivel about a vertical pivot axis 68P in any angular orientation of the arms with respect to the frame 32. Accordingly, the wheel support 68 may be a steering knuckle. A steering actuator (not represented) may control the orientation of the steering knuckle about the vertical pivot axis 68P.

A connection 68 of the cooling system 24 is apparent. The connection 68 may comprise a deformable portion. The connection 68 may comprise a tube 70. The tube 70 may be a resilient tube 70 and/or an arcuate tube 70. The tube 70 may form an arcuate line with curves in the cooling system 24. The tube 70 may project from the electric engine 42. The tube 70 may extend toward a pivoting arm, for instance the upper pivoting arm 64. The tube 70 may extend along the upper ball joint 68J attaching the upper pivoting arm 64 to the wheel support 68. The tube 70 may be deformed in order to accommodate the motion of the engine 42 about the ball joints 68J.

The connection 58 may comprise a pipe 72, notably a stiff pipe. The pipe 72 may project from the tube 70. The pipe 72 may be essentially straight. It may be rigidly fixed to the upper pivoting arm 64. It may extend toward the pivot joint 48J attaching the upper pivoting arm 64 to the wheel housing 18. The pipe 72 may be stiffer than the tube 70. The tube 70 may be more resilient than the pipe 72.

As an option, the connection 58 may comprise an additional resilient tube 70A joining the pipe 72 to the frame 32.

As an option, the connection 68 comprise a single resilient tube projecting from the electric engine 42 to the pivot joint 48J attaching the upper pivoting arm 64 to the wheel housing 18.

The electric engine 42 may be an in-wheel electric engine 42. The in-wheel electric engine 42 may be in the rim 8R of the wheel 8. The in-wheel electric engine 42 may be encircled by the tire 8T received by the rim 8R. The in-wheel electric engine 42 may comprise a portion outside the wheel 8. It may comprise an inner face outside the wheel 8, and notably outside the rim 8R.

A heat exchanger 30 is represented with a dotted line. The eight of the heat exchanger 30 is smaller than that of the wheel housing 18. The wheel housing 18 extends on the whole height and/or the whole width of the heat exchanger 30. The wheel 8 may extends on the whole height of the heat exchanger 30. Thus, the heat exchanger 30 is disposed in a narrow space. Its integration in the frame 32 requires a small place. The cooling system 24 is therefore compact.

The bus 2 comprises at least one seat 56, for instance several seats forming one row. Each seat 56 may comprise a seat base 56B and a back rest 56R. The seat(s) 56, notably the seat base(s) 56B, may be above the cooling system 24. The seat(s) 56, notably the seat base(s) 56B, may be above the connection 58. The seat(s) 56, notably the seat base(s) 56B, may be above the tube(s) 70 and/or the pipe 72. Accordingly, the available space for the connection 68 and its portion is delimited by the seat(s) 56. Such an arrangement optimises the bus 2 compacity and respect a specific seat arrangement allowing to increase the number of seats 56 in the bus. Hence, the invention improves compacity.

The current figure only describes the cooling system 24 in relation with one wheel 8. However, the wheel housing 18 may further receive another wheel 8. Thus, the above description may be duplicated for said another wheel 8.

In addition, the bus 2 may comprise another wheel housing which is symmetric to the above described one. A symmetric cooling system may be associated to the symmetric wheel housing 18 As an alternative, the ball joints 68J may be replaced by pivot joints.

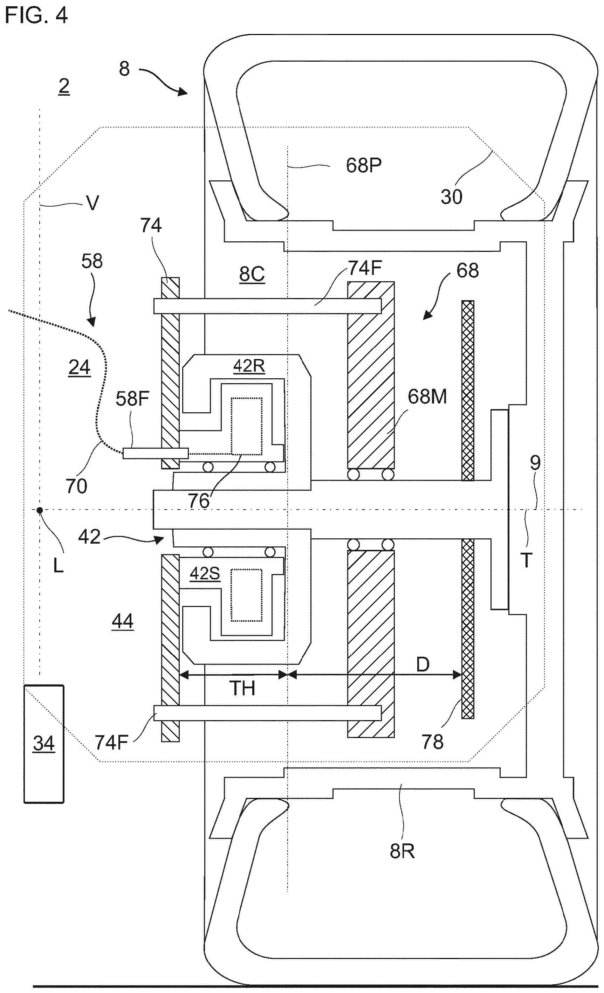

Figure 4 provides a schematic illustration of a cut out of a wheel 8 where a cooling system 24 according to the invention, spans. The bus 2 may correspond to those as described in relation with any one of figures 1 to 3.

The transversal direction T, the longitudinal direction L and the vertical direction V are provided. These directions (T, L, V) may be perpendicular to each other. The rotation axis 9 of the wheel 8 may be along the transversal direction T, notably depending on the steering angle of the wheel support 68, and of the configuration of the suspension system 44. The position of the vertical pivot axis 68P is provided. A longitudinal beam 34 is represented, whereas the pivoting arms are omitted for the sake of clarity.

The wheel support 68 may comprise a main body 68M also designated as central body. The main body 68M may be disposed in the wheel 8, notably in the radial space 8C delimited by the rim 8R. The radial space 8C may form an inner cavity in the rim 8R. The radial space 8C may have an annular shape. It may have a toroidal shape encircling the rotation axis 9. In addition, the wheel support 68 may comprise an inner plate 74 to which the electric engine 42 is fixed. The inner plate 74 may be fixed to the main body 68M by fixation means 74F such as screws. The fixation means 74F may project along, and notably over the electric engine 42.

The electric engine 42 may comprise a rotor 42R and a stator 42S. The rotor 42R may comprise permanent magnets (not represented). The stator 42S may comprise magnetic coils. The electric engine 42 may be of radial type, with a radial magnetic air gap. Alternatively, it may be an axial one.

The rotor 42R may be outside the stator 42S. The rotor 42R may encircle, and possibly encapsulate the stator 42S. As an option, the stator 42S may be fixed to the inner plate 74 at a location outside the rim 8R, and more generally the wheel 8. Fittings 58F (only one represented) of the connection 58, may form the inlet and the outlet of the electric engine 42, and may cross the inner plate 74. As an example, the fittings 58F may be connected to the tube 70.

The cooling circuit 24 may comprise an inner network 76 through the electric engine 42. The cooling circuit 24 , respectively the inner network 76, may comprise at least one loop in the electric engine 42, notably in the stator 42S. The inner network 76 may form a serpentine. The inner network 76 may allow a cooling fluid flow adapted for cooling the electric engine 42. The inner network 76 may be formed in, and in thermal contact of the stator 42S. The inner network 76 may be at distance from the rotor 42R. The inner network 76 may be, at least partially in the radial space 8C; and more generally in the wheel 8. Thus, the inner network 76 may directly cool the stator 42S, and may cool the magnetic coils heated by the electric power. Then, the temperature may be reduced during drive, and the maximum torque may be delivered continuously.

The wheel 8 may comprise a disc brake with a brake calliper and a brake disc 78. The disc brake may be an emergency brake, or a safety brake. It may be activated mechanically. It may assist the electric engine 42 when it is used a power generator during braking. The brake disc 78 may be at distance from the electric engine 42. The main body 58M of the wheel support 58 may be arranged between them. The brake disc 78 may be in the wheel 8. The thickness TH of the stator 42S may be smaller than the distance D between the brake disc 78 and the stator 42S. The thickness TH and the distance D may be measured transversally and/or along the rotation axis 9 or the wheel 8. Optionally, the thickness of the electric engine 42 is as thick or smaller than the distance D between the brake disc 78 and the electric engine 42.

The arrangement of the brake disc 78 with respect to the electric engine 42, respectively the stator 42S, reduce the thermal effect of the brake disc 78 on the magnetic parts. Accordingly, the performances of the electric engine 42 are preserved. Its physical properties too.

The tube 70 may define a first passage with a first inner width in the cooling circuit 24. The inner network 76 may define a second passage with a second inner width in the cooling circuit 24. The first passage may be outside the in-wheel electric engine 42. The first inner width may represent at least 80% of the second inner width. As an option, the first inner width is larger than the second inner width. The widths may be measured perpendicularly to the cooling flow through the corresponding segment.

The heat exchanger 30 is represented. Along the longitudinal direction, the heat exchanger 30 may be aligned with the wheel 8. In addition, the heat exchanger 30 may be outside the wheel housing in which the wheel is arranged.

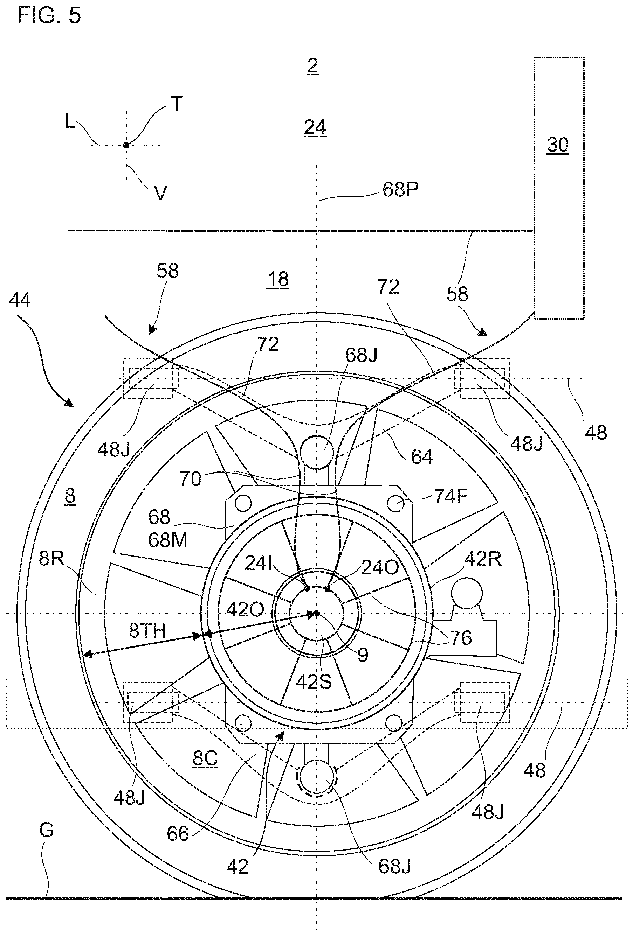

Figure 5 provides a schematic illustration of a wheel 8 combined with a cooling system 24 of a bus 2 according to the invention. The bus 2 may correspond to those as described in relation with any one of figures 1 to 4.

The transversal direction T, the longitudinal direction L and the vertical direction V are provided. These directions (T, L, V) may be perpendicular to each other.

The suspension system 44 is represented with the upper pivoting arm 64 and the lower pivoting arm 66. The upper pivoting arm 64 and the lower pivoting arm 66 are joined by the wheel support 68. The ball joints 68J and the pivot joints 48J at their transversal ends are represented. The later allows oscillations about the longitudinal pivot axis 48. The fixation means 74F of the wheel support 68 are represented. The fixation means 74F may project from the main body 68M which is represented behind the engine 42.

The rim 8R of the wheel 8 defines a radial space 8C in which the engine 42 is disposed. The radial space 8C may have an annular shape around the rotation axis 9. The engine 42 may be an in-wheel electric engine 42. The in-wheel electric engine 42, notably its rotor 42R, may rotate about the rotation axis 9 of the wheel 8.

The heat exchanger 30 may be at distance from the in-wheel electric engine 42. The heat exchanger 30 may be at distance from the wheel 8. The heat exchanger 30 may be outside the wheel housing 18. The heat exchanger 30 may be in fluid flow communication with the in-wheel electric engine 42 by means of the connections 58. The represented position of the heat exchanger 30 with respect to the wheel 8 may be purely illustrative in the current figure.

The connections 58 may comprise several lines entering or going out of the heat exchanger 30. The connections 58 may comprise lines attached to the pivoting arms, for instance the upper pivoting arm 64. As apparent from the current figure, the wheel 8 may transversally comprise an outer half, and an inner half in which the in-wheel electric engine 42 is arranged. The in-wheel electric engine 42 may be at distance from said outer half.

The cooling circuit 24 may comprise an inlet 24I and an outlet 24O in the in-wheel electric engine 42. The inlet 24I and an outlet 24O may be at the interface between the connections 58 and the in-wheel electric engine 42. They may be at the interface between the tube 70 and the inner network 76. The inlet 24I and an outlet 24O may be disposed on the upper half of the engine 42. They may be above the rotation axis 9. Thereby, they are more protected against stone projections lifted from the ground G.

The inner network 76 may comprise passageways arranged radially. A radial passageway extends perpendicularly to the rotation axis 9. The inner network 76 may comprise circular passageways, for instance around the rotation axis 9 of the wheel 8. These passageways, and thus the inner network 76, increase the contact surface between the stator 42S and the cooling fluid. This surface increase allows a cooling fluid flow speed reduction in order to avoid pressure losses in the cooling circuit. Thus, the associated pump requires less energy.

The wheel 8 may comprise a radial space 8C between the in-wheel electric engine 42 and the rim 8R. The radial space 8C may be radially larger than the outer radius 42O of the in-wheel electric engine 42, possibly at least two times larger than the outer radius 42O. For instance, the radial thickness 8TH of the radial space 8C may be radially larger than the outer radius 42O of the in-wheel electric engine 42, possibly at least two times larger than the outer radius 42O.

The cooling circuit 24 may comprise several tubes 70. The tubes 70 may be arcuate tubes. They may have elbow portions. The tubes 70 may extend from the inlet 24I and the outlet 24O connected to the in-wheel electric engine 42. The cooling circuit 24 may comprise pipes 72. The pipes may be in contact of the tubes 70. They may be one after the other. The pipes 72 may be fixed and secured to at least one pivoting arm (64; 66), notably the upper pivoting arm 64. The tubes 70 may be more resilient than the pipes 72 in order to allow wheel motions about the vertical pivot axis 68P.

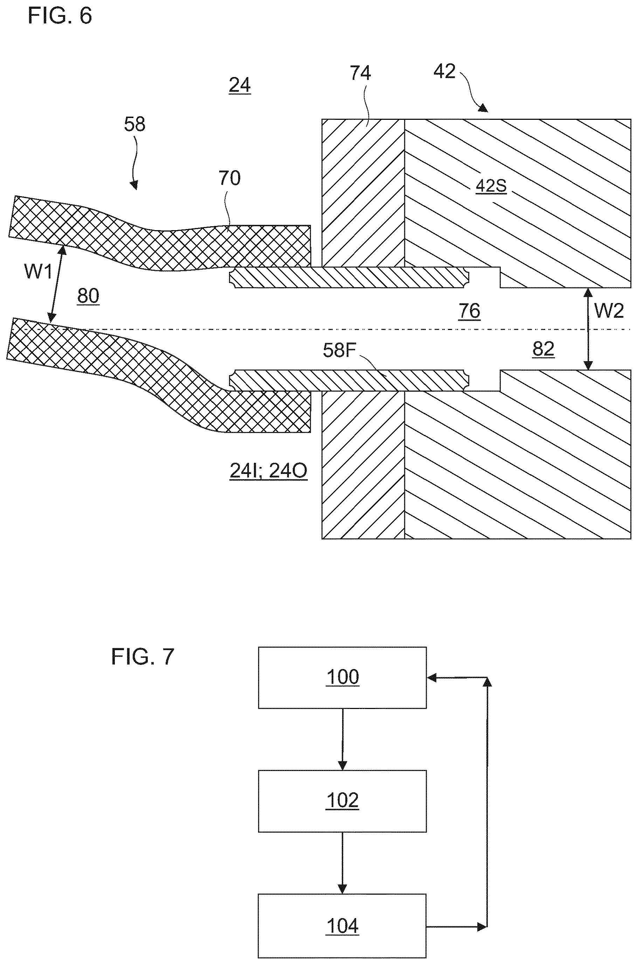

Figure 6 provides a schematic illustration of the interface between an engine 42, notably an in-wheel electric engine 42, and connections 58 of a cooling circuit 24. The engine 42, notably an in-wheel electric engine 42, may correspond to those as described in relation with anyone of figure 1 to 5. The cooling circuit 24 may correspond to anyone of those as described in relation with figures 1 to 5.

The cooling circuit 24 may comprises a first passage 80 outside the in-wheel electric engine 42. The first passage 80 may comprise a first inner width W1. The inner width W1 may be an inner diameter. The cooling circuit 23 may further comprise a second passage 82 in the in-wheel electric engine 42. The second passage 82 may comprise a second inner width W2, which may correspond to an inner diameter. The second passage 82 may correspond to the passageway. The second passage 82 may be in fluid flow communication with the inner network 76.

The first passage 80 and the second passage 82 may have similar cross sections. The first inner width W1 may represent at least 80% of the second inner width W2. As an option, the first inner width W1 is larger than the second inner width W2. The ratio W1/W2 may range from 0.8 to 1.50. Optionally the ratio W1/W2 is equal to 1. These inner widths (W1; W2) may be similar. The first inner width W1 and the second inner width W2 may be measured at distance from the fitting 58F. They may be measured where they are constant. They may be measured at the inlet 24I or at the outlet 24O of the cooling circuit 24.

By way of an example, the first inner width W1 measures about: 8 mm, or 10 mm, or 12 mm. The second inner width W2 may represents at least: 2%, or 4%, or 6%, of the outer diameter of the in-wheel electric engine 42. The outer diameter may be deduced from the outer radius 42O as defined in figure 5. The outer diameter of the engine 42 may be at most: 30 cm, or 25 cm. Thus, the engine is substantially small in order to reduce unbalanced weight, and to increase track control and road holding.

The first passage 80 may be formed in a connection 58, notably in a tube 70. The tube 70 may be arcuate. Its centreline may draw a curve. The second passage 82 may be formed in the engine 42, notably an in-wheel electric engine 42. It may be formed in the stator 42S. It may be at distance from the inner plate 74 of the wheel support.

The current arrangement ensures a smooth transition for the cooling fluid. In addition, it avoids pressure losses which negatively affects the engine temperature control. The size of the required pump may be reduced, and the pumping energy as well.

The invention considers an embodiment with the combination of the teachings of figures 1 to 6.

Figure 7 provides a schematic illustration of a cooling process of an in-wheel electric engine by means of a cooling circuit for a bus in accordance with a preferred embodiment of the invention. The bus, and notably the cooling circuit, may correspond to anyone of those as described in relation with figures 1 to 6, or more generally above.

The cooling process may comprise the steps:
standby 100,
heating 102 the in-wheel electric engine, and
cooling 104 the in-wheel electric engine by means of the cooling liquid.

During step standby 100, the in-wheel electric engine may be free of electric power. It may be electrically disconnected from the battery pack. Similarly, the pump may be free of electric power. The cooling fluid may be stopped therein.

Steps heating 102 and cooling 104 may be performed simultaneously. After them, the bus, notably the electric engine and the battery pack may return to step standby 100.

During step heating 102 and/or during step cooling 104, the flow speed of the cooling fluid in the connection may be similar to the flow speed of the cooling fluid in the in-wheel electric engine. During step heating 102 and/or during step cooling 104, the flow speed of the cooling fluid in the connection may represent: from 50% to 150%, or from 80% to 120%, of the flow speed of the cooling fluid in the in-wheel electric engine.

The cooling fluid may be a cooling liquid. Its temperature may be kept below 100°C.

During step cooling 104 the in-wheel electric engine, the passenger compartment is heated, and the pressure of the cooling fluid in the connection may be similar to the pressure of the cooling fluid in the in-wheel electric engine.

During step heating 102 and/or during step cooling 104, the pressure of the cooling liquid in the connection may represent: from 50% to 150%, or from 80% to 120%, of the pressure of the cooling liquid in the in-wheel electric engine. The pressure may be the static or the dynamic pressure.

It should be understood that the detailed description of specific preferred embodiments is given by way of illustration only, since various changes and modifications within the scope of the invention will be apparent to the person skilled in the art, the scope of the invention being defined by the following set of claims.

## Claims

1. Bus (2), notably an articulated bus with several units (4), the bus (2) comprising:
• a passenger compartment (2P) adapted for at least fifty passengers,
• a wheel housing (18),
• a wheel (8) disposed in the wheel housing (18) and comprising an in-wheel electric engine (42),
• a cooling circuit (24) in fluid flow communication with the in-wheel electric engine (42) ;
**characterized in that**
• the cooling circuit (24) comprises a heat exchanger (30) outside the wheel housing (18), and wherein
the wheel housing (18) comprises a tight wall (50) and a protection bar (38) between the wheel (8) and the heat exchanger (30), and the bus (2) further comprises an enclosure (52) in which the heat exchanger (30) is arranged, said enclosure (52) being adjacent to the wheel housing (18) and/or the passenger compartment (2P), the heat exchanger (30) being adapted for heating the passenger compartment (2P).

2. Bus (2) in accordance with claim 1, wherein the cooling circuit (24) comprises a first passage (80) which is outside the in-wheel electric engine (42) and which comprises a first inner width W1, the cooling circuit (24) further comprising a second passage (82) which is in the in-wheel electric engine (42) and which comprises a second inner width W2, the first inner width W1 representing at least 80% of the second inner width W2, optionally the first inner width W1 is larger than the second inner width W2.

3. Bus (2) in accordance with any one of claims 1 to 2, wherein the heat exchanger (30) is transversally and/or vertically level with the wheel (8), respectively with the in-wheel electric engine (42), the bus (2) further comprising a seat row above said heat exchanger (30).

4. Bus (2) in accordance with any one of claims 1 to 3, wherein the bus (2) comprises a suspension arm (46) adapted to pivot with respect to the wheel housing (18), the cooling circuit (24) comprising a tube (70), notably a resilient tube, joined to said suspension arm (46) and being in fluid flow communication with the in-wheel electric engine (42).

5. Bus (2) in accordance with claim 4, wherein the suspension arm (46) is an upper pivoting arm (64), the cooling circuit (24) comprising a pipe (72) fixed to said upper pivoting arm (64), said pipe (72) being stiffer than the resilient tube (70).

6. Bus (2) in accordance with any one of claims 1 to 5, wherein the bus (2) comprises a battery pack (22) adapted for electrically powering the in-wheel electric engine (42), the cooling circuit (24) comprising a cooling unit (22C) adapted for cooling said battery pack (22), the wheel housing (18) being disposed longitudinally between the battery pack (22) and the heat exchanger (30).

7. Bus (2) in accordance with any one of claims 1 to 6, wherein the bus (2) comprises a frame (32) and a movable wheel support (68) to which the wheel (8) is rotatably fixed, the wheel support (68) is notably disposed between the brake disc (78) and the in-wheel electric engine (42).

8. Bus (2) in accordance with any one of claims 1 to 7, wherein transversally, the in-wheel electric engine (42) comprises an inner face and an outer face, the cooling circuit (24) comprising an inlet (24I) and an outlet (24O) on the inner face, the inlet (24I) and the outlet (24O) being on the inner face, preferably in the upper half of the inner face.

9. Bus (2) in accordance with any one of claims 1 to 8, wherein the wheel (8) comprises a radial space (8C) between the in-wheel electric engine (42) and the rim (8R) of the wheel (8), said radial space (8) being radially larger than the outer radius (42O) of the in-wheel electric engine (42), possibly at least two times larger than the outer radius (42O).

10. Bus (2) in accordance with any one of claims 1 to 9, wherein the cooling circuit (24) is a first cooling circuit, the wheel housing (18) is a first wheel housing, the bus (2) further comprising additional wheel housings and additional cooling circuits (24) which are identical to the first cooling circuit (24) and which are each associated with one of the additional wheel housings (18), the additional cooling circuits being thermally independent from each another.

11. A cooling process of an in-wheel electric engine (42) of a bus (2) in accordance with any of claims 1 to 10, the cooling process comprising the steps:
heating (102) the in-wheel electric engine (42), and
cooling (104) the in-wheel electric engine (42) by means of a cooling fluid of the cooling circuit (24), **characterized in that**
the flow speed of the cooling fluid in the connection is similar to the flow speed of the cooling fluid in the in-wheel electric engine (42), and **in that** the bus (2) comprises a seat (56) over the cooling circuit (24).

12. Cooling process in accordance with claim 11, wherein the flow speed of the cooling fluid in the connection represents from 80% to 120%, of the flow speed of the cooling fluid in the in-wheel electric engine (42).

13. Cooling process in accordance with any one of claims 11 to 12, wherein during step cooling (104) the in-wheel electric engine (42), the passenger compartment (2P) is heated by the heat exchanger (30), and the pressure of the cooling fluid in the connection is similar to the pressure of the cooling fluid in the in-wheel electric engine (42).

14. Use of a heat exchanger (30) for heating the passenger compartment (2P) of a bus, **characterized in that** the bus (2) comprises:
a wheel housing (18),
a wheel (8) disposed in the wheel housing (18) and comprising an in-wheel electric engine (42),
a cooling circuit (24) for with the in-wheel electric engine (42) and comprising a heat exchanger (30);
an enclosure (52) in heat exchange with the passenger compartment (2P) and in which the heat exchanger (30) is disposed, the bus notably being in accordance with any of claims 1 to 10.

## Patentansprüche

1. Bus (2), insbesondere ein Gelenkbus mit mehreren Einheiten (4), wobei der Bus (2) umfasst:
· einen Fahrgastraum (2P), der für mindestens fünfzig Passagiere geeignet ist,
· einen Radkasten (18),
· ein Rad (8), das im Radkasten (18) angeordnet ist und einen Radnaben-Elektromotor (42) umfasst,
· einen Kühlkreislauf (24) in Fluidströmungskommunikation mit dem Radnaben-Elektromotor (42); **dadurch gekennzeichnet, dass**
· der Kühlkreislauf (24) einen Wärmetauscher (30) außerhalb des Radkastens (18) umfasst, wobei der Radkasten (18) eine dichte Wand (50) und eine Schutzstange (38) zwischen dem Rad (8) und dem Wärmetauscher (30) umfasst, und der Bus (2) ferner ein Gehäuse (52) umfasst, in dem der Wärmetauscher (30) angeordnet ist, wobei das Gehäuse (52) an den Radkasten (18) und/oder den Fahrgastraum (2P) angrenzt, wobei der Wärmetauscher (30) geeignet ist, den Fahrgastraum (2P) zu beheizen.

2. Bus (2) gemäß Anspruch 1, wobei der Kühlkreislauf (24) einen ersten Durchgang (80) umfasst, der außerhalb des Radnaben-Elektromotors (42) liegt und eine erste Innenbreite W1 umfasst, wobei der Kühlkreislauf (24) ferner einen zweiten Durchgang (82) umfasst, der im Radnaben-Elektromotor (42) liegt und eine zweite Innenbreite W2 umfasst, wobei die erste Innenbreite W1 mindestens 80% der zweiten Innenbreite W2 darstellt, optional ist die erste Innenbreite W1 größer als die zweite Innenbreite W2.

3. Bus (2) gemäß einem der Ansprüche 1 bis 2, wobei der Wärmetauscher (30) transversal und/oder vertikal auf Höhe des Rads (8) bzw. des Radnaben-Elektromotors (42) liegt, wobei der Bus (2) ferner eine Sitzreihe über dem Wärmetauscher (30) umfasst.

4. Bus (2) gemäß einem der Ansprüche 1 bis 3, wobei der Bus (2) einen Schwingarm (46) umfasst, der geeignet ist, relativ zum Radkasten (18) zu schwenken, wobei der Kühlkreislauf (24) ein Rohr (70), insbesondere ein elastisches Rohr, umfasst, das mit dem Schwingarm (46) verbunden ist und in Fluidströmungskommunikation mit dem Radnaben-Elektromotor (42) steht.

5. Bus (2) gemäß Anspruch 4, wobei der Schwingarm (46) ein oberer Schwenkarm (64) ist, wobei der Kühlkreislauf (24) ein Rohr (72) umfasst, das an dem oberen Schwenkarm (64) befestigt ist, wobei das Rohr (72) steifer ist als das elastische Rohr (70).

6. Bus (2) gemäß einem der Ansprüche 1 bis 5, wobei der Bus (2) ein Batteriepaket (22) umfasst, das geeignet ist, den Radnaben-Elektromotor (42) elektrisch zu betreiben, wobei der Kühlkreislauf (24) eine Kühlvorrichtung (22C) umfasst, die geeignet ist, das Batteriepaket (22) zu kühlen, wobei der Radkasten (18) längs zwischen dem Batteriepaket (22) und dem Wärmetauscher (30) angeordnet ist.

7. Bus (2) gemäß einem der Ansprüche 1 bis 6, wobei der Bus (2) einen Rahmen (32) und eine bewegliche Radstütze (68) umfasst, an der das Rad (8) drehbar befestigt ist, wobei die Radstütze (68) insbesondere zwischen der Bremsscheibe (78) und dem Radnaben-Elektromotor (42) angeordnet ist.

8. Bus (2) gemäß einem der Ansprüche 1 bis 7, wobei der Radnaben-Elektromotor (42) transversal eine innere Fläche und eine äußere Fläche umfasst, wobei der Kühlkreislauf (24) einen Einlass (241) und einen Auslass (240) an der inneren Fläche umfasst, wobei der Einlass (241) und der Auslass (240) an der inneren Fläche, vorzugsweise in der oberen Hälfte der inneren Fläche, angeordnet sind.

9. Bus (2) gemäß einem der Ansprüche 1 bis 8, wobei das Rad (8) einen radialen Raum (8C) zwischen dem Radnaben-Elektromotor (42) und der Felge (8R) des Rads (8) umfasst, wobei der radiale Raum (8C) radial größer ist als der Außenradius (420) des Radnaben-Elektromotors (42), möglicherweise mindestens zweimal größer als der Außenradius (420).

10. Bus (2) gemäß einem der Ansprüche 1 bis 9, wobei der Kühlkreislauf (24) ein erster Kühlkreislauf ist, der Radkasten (18) ein erster Radkasten ist, wobei der Bus (2) ferner zusätzliche Radkästen und zusätzliche Kühlkreisläufe (24) umfasst, die identisch mit dem ersten Kühlkreislauf (24) sind und jeweils einem der zusätzlichen Radkästen (18) zugeordnet sind, wobei die zusätzlichen Kühlkreisläufe thermisch unabhängig voneinander sind.

11. Kühlprozess eines Radnaben-Elektromotors (42) für einen Bus (2) gemäß einem der Ansprüche 1 bis 10, wobei der Kühlprozess die Schritte umfasst: Erhitzen (102) des Radnaben-Elektromotors (42) und Kühlen (104) des Radnaben-Elektromotors (42) mittels einer Kühlflüssigkeit des Kühlkreislaufs (24), **dadurch gekennzeichnet, dass** die Fließgeschwindigkeit der Kühlflüssigkeit in der Verbindung ähnlich der Fließgeschwindigkeit der Kühlflüssigkeit im Radnaben-Elektromotor (42) ist, und dass der Bus (2) einen Sitz (56) über dem Kühlkreislauf (24) umfasst.

12. Kühlprozess gemäß Anspruch 11, wobei die Fließgeschwindigkeit der Kühlflüssigkeit in der Verbindung zwischen 80% und 120% der Fließgeschwindigkeit der Kühlflüssigkeit im Radnaben-Elektromotor (42) beträgt.

13. Kühlprozess gemäß einem der Ansprüche 11 bis 12, wobei während des Schritts Kühlen (104) des Radnaben-Elektromotors (42) der Fahrgastraum (2P) durch den Wärmetauscher (30) beheizt wird, und der Druck der Kühlflüssigkeit in der Verbindung ähnlich dem Druck der Kühlflüssigkeit im Radnaben-Elektromotor (42) ist.

14. Verwendung eines Wärmetauschers (30) zur Beheizung des Fahrgastraums (2P) eines Busses, **dadurch gekennzeichnet, dass** der Bus (2) umfasst:
einen Radkasten (18),
ein Rad (8), das im Radkasten (18) angeordnet ist und einen Radnaben-Elektromotor (42) umfasst.
einen Kühlkreislauf (24) für den Radnaben-Elektromotor (42) und einen Wärmetauscher (30) umfassend;
ein Gehäuse (52) in Wärmeaustausch mit dem Fahrgastraum (2P) und in dem der Wärmetauscher (30) angeordnet ist, wobei der Bus insbesondere gemäß einem der Ansprüche 1 bis 10 ist.

## Revendications

1. Bus (2), notamment un bus articulé avec plusieurs unités (4), le bus (2) comprenant :
· un compartiment passagers (2P) adapté pour au moins cinquante passagers,
· un logement de roue (18),
· une roue (8) disposée dans le logement de roue (18) et comprenant un moteur électrique intégré à la roue (42),
· un circuit de refroidissement (24) en communication de flux de fluide avec le moteur électrique intégré à la roue (42) ; **caractérisé en ce que**
· le circuit de refroidissement (24) comprend un échangeur de chaleur (30) à l'extérieur du logement de roue (18), et dans lequel le logement de roue (18) comprend une paroi étanche (50) et une barre de protection (38) entre la roue (8) et l'échangeur de chaleur (30), et le bus (2) comprend en outre une enceinte (52) dans laquelle l'échangeur de chaleur (30) est disposé, ladite enceinte (52) étant adjacente au logement de roue (18) et/ou au compartiment passagers (2P), l'échangeur de chaleur (30) étant adapté pour chauffer le compartiment passagers (2P).

2. Bus (2) selon la revendication 1, dans lequel le circuit de refroidissement (24) comprend un premier passage (80) qui est à l'extérieur du moteur électrique intégré à la roue (42) et qui comprend une première largeur intérieure W1, le circuit de refroidissement (24) comprenant en outre un deuxième passage (82) qui est dans le moteur électrique intégré à la roue (42) et qui comprend une deuxième largeur intérieure W2, la première largeur intérieure W1 représentant au moins 80 % de la deuxième largeur intérieure W2, éventuellement la première largeur intérieure W1 est plus grande que la deuxième largeur intérieure W2.

3. Bus (2) selon l'une quelconque des revendications 1 à 2, dans lequel l'échangeur de chaleur (30) est transversalement et/ou verticalement au niveau de la roue (8), respectivement du moteur électrique intégré à la roue (42), le bus (2) comprenant en outre une rangée de sièges au-dessus dudit échangeur de chaleur (30).

4. Bus (2) selon l'une quelconque des revendications 1 à 3, dans lequel le bus (2) comprend un bras de suspension (46) adapté pour pivoter par rapport au logement de roue (18), le circuit de refroidissement (24) comprenant un tube (70), notamment un tube résilient, relié audit bras de suspension (46) et étant en communication de flux de fluide avec le moteur électrique intégré à la roue (42).

5. Bus (2) selon la revendication 4, dans lequel le bras de suspension (46) est un bras pivotant supérieur (64), le circuit de refroidissement (24) comprenant un tuyau (72) fixé audit bras pivotant supérieur (64), ledit tuyau (72) étant plus rigide que le tube résilient (70).

6. Bus (2) selon l'une quelconque des revendications 1 à 5, dans lequel le bus (2) comprend un pack de batteries (22) adapté pour alimenter électriquement le moteur électrique intégré à la roue (42), le circuit de refroidissement (24) comprenant une unité de refroidissement (22C) adaptée pour refroidir ledit pack de batteries (22), le logement de roue (18) étant disposé longitudinalement entre le pack de batteries (22) et l'échangeur de chaleur (30).

7. Bus (2) selon l'une quelconque des revendications 1 à 6, dans lequel le bus (2) comprend un cadre (32) et un support de roue mobile (68) auquel la roue (8) est fixée de manière rotative, le support de roue (68) étant notamment disposé entre le disque de frein (78) et le moteur électrique intégré à la roue (42).

8. Bus (2) selon l'une quelconque des revendications 1 à 7, dans lequel transversalement, le moteur électrique intégré à la roue (42) comprend une face intérieure et une face extérieure, le circuit de refroidissement (24) comprenant une entrée (241) et une sortie (240) sur la face intérieure, l'entrée (241) et la sortie (240) étant sur la face intérieure, de préférence dans la moitié supérieure de la face intérieure.

9. Bus (2) selon l'une quelconque des revendications 1 à 8, dans lequel la roue (8) comprend un espace radial (8C) entre le moteur électrique intégré à la roue (42) et la jante (8R) de la roue (8), ledit espace radial (8C) étant radialement plus grand que le rayon extérieur (420) du moteur électrique intégré à la roue (42), éventuellement au moins deux fois plus grand que le rayon extérieur (420).

10. Bus (2) selon l'une quelconque des revendications 1 à 9, dans lequel le circuit de refroidissement (24) est un premier circuit de refroidissement, le logement de roue (18) est un premier logement de roue, le bus (2) comprenant en outre des logements de roue supplémentaires et des circuits de refroidissement supplémentaires (24) qui sont identiques au premier circuit de refroidissement (24) et qui sont chacun associés à l'un des logements de roue supplémentaires (18), les circuits de refroidissement supplémentaires étant thermiquement indépendants les uns des autres.

11. Processus de refroidissement d'un moteur électrique intégré à la roue (42) pour un bus (2) selon l'une quelconque des revendications 1 à 10, le processus de refroidissement comprenant les étapes : chauffer (102) le moteur électrique intégré à la roue (42), et refroidir (104) le moteur électrique intégré à la roue (42) au moyen d'un fluide de refroidissement du circuit de refroidissement (24), **caractérisé en ce que** la vitesse d'écoulement du fluide de refroidissement dans la connexion est similaire à la vitesse d'écoulement du fluide de refroidissement dans le moteur électrique intégré à la roue (42), et **en ce que** le bus (2) comprend un siège (56) au-dessus du circuit de refroidissement (24).

12. Processus de refroidissement selon la revendication 11, dans lequel la vitesse d'écoulement du fluide de refroidissement dans la connexion représente de 80 % à 120 % de la vitesse d'écoulement du fluide de refroidissement dans le moteur électrique intégré à la roue (42).

13. Processus de refroidissement selon l'une quelconque des revendications 11 à 12, dans lequel, pendant l'étape de refroidissement (104) du moteur électrique intégré à la roue (42), le compartiment passagers (2P) est chauffé par l'échangeur de chaleur (30), et la pression du fluide de refroidissement dans la connexion est similaire à la pression du fluide de refroidissement dans le moteur électrique intégré à la roue (42).

14. Utilisation d'un échangeur de chaleur (30) pour chauffer le compartiment passagers (2P) d'un bus, **caractérisé en ce que** le bus (2) comprend :
un logement de roue (18),
une roue (8) disposée dans le logement de roue (18) et comprenant un moteur électrique intégré à la roue (42),
un circuit de refroidissement (24) pour le moteur électrique intégré à la roue (42) et
comprenant un échangeur de chaleur (30) ;
une enceinte (52) en échange de chaleur avec le compartiment passagers (2P) et dans laquelle l'échangeur de chaleur (30) est disposé, le bus étant notamment conforme à l'une quelconque des revendications 1 à 10.
